# EUROPÄISCHE PATENTSCHRIFT

(11) **EP 1 590 568 B1**
(45) Veröffentlichungstag und Bekanntmachung des Hinweises auf die Patenterteilung: **28.07.2010**
(21) Anmeldenummer: 04706171.8
(22) Anmeldetag: 29.01.2004
(51) Int. Cl.: F04B 1/12, B23P 15/10, F01B 3/00

(54) **HOHLKOLBEN F R EINE KOLBENMASCHINE UND VERFAHREN ZUM HERSTEL LEN EINES HOHLKOLBENS**
TUBULAR PISTON FOR A PISTON ENGINE AND METHOD FOR PRODUCING A TUBULAR PISTON
PISTON CREUX POUR UNE MACHINE A PISTON ET PROCEDE DE PRODUCTION D'UN PISTON CREUX

(30) Priorität: 07.02.2003 DE 10305136
(43) Veröffentlichungstag der Anmeldung: 02.11.2005
(73) Patentinhaber: Brueninghaus Hydromatik GmbH, 89275 Elchingen (DE)
(72) Erfinder: BECK, Josef, 78050 Villingen (DE)
(74) Vertreter: Körfer, Thomas
(86) Internationale Anmeldenummer: PCT/EP2004/000799
(87) Internationale Veröffentlichungsnummer: WO 2004/070205

(56) Entgegenhaltungen:
- DE-A- 2 653 867
- DE-A- 19 706 075
- DE-A- 19 938 046
- US-A- 5 265 331

## Beschreibung

Die Erfindung bezieht sich auf einen Hohlkolben für eine Kolbenmaschine nach dem Oberbegriff des Anspruches 1 bzw. auf ein Verfahren zum Herstellen eines solchen Hohlkolbens.

Ein Hohlkolben nach dem Oberbegriff des Anspruches 1 und ein Verfahren zum Herstellen eines Hohlkolbens sind in der DE 199 38 046 A1 beschrieben. Dabei umfaßt ein Hohlkolben für eine Kolbenmaschine einen Basisabschnitt, von dem sich in der einen Achsrichtung ein Kugelgelenkteil und in der anderen Achsrichtung eine den Hohlraum des Hohlkolbens umgebende Umfangswand erstreckt, wobei der Hohlraum im freien Endbereich des Hohlkolbens durch eine Verschlußanordnung geschlossen ist. Um eine einfache und kostengünstige Herstellung zu gewährleisten, ist der Hohlkolben einstückig ausgebildet, und die Verschlußanordnung ist durch eine radial einwärts gerichtete Einformung der Umfangswand gebildet.

Das US-Patent 5,642,654 beschreibt einen Kolben und ein Verfahren zur Herstellung des beschriebenen Kolbens. Der Kolben umfasst ein im Wesentlichen zylindrisches Bauteil mit einem ersten und einem zweiten Ende. Das zylindrische Bauteil weist einen offenen Hohlraum auf, der sich in axialer Richtung vom zweiten Ende zum ersten Ende ausdehnt, so dass das zweite Ende eine innere ringförmige Fläche aufweist, welche von einem inneren Kreis begrenzt ist. Des Weiteren umfasst der Kolben eine Scheibe mit einer radial angebrachten äußeren Fläche, welche durch einen äußeren Durchmesser festgelegt ist, wobei die Fläche am zweiten Ende des zylindrischen Bauteils befestigt ist.

Aus der DE 197 06 075 A1 ist ein Hohlkolben für eine hydrostatische Maschine mit einem Außenrohr, das zu einem Schaftteil und einem über ein Halsteil mit dem Schaftteil verbundenen Kugelgelenkteil ausgeformt ist, und einem sich im Inneren des Außenrohres über dessen gesamte Länge erstreckenden Innenrohr bekannt. Der Außendurchmesser des Innenrohres und der Innendurchmesser des Außenrohres sind dabei so bemessen, daß zumindest im Bereich des Schaftteils zwischen dem Innenrohr und dem Außenrohr ein Hohlraum ausgebildet ist, wobei das Außenrohr und das Innenrohr jeweils aus einem hohlzylinderförmigen Rohling mit gleichförmiger Wandstärke gefertigt sind. Der das Außenrohr bildende Rohling ist dabei durch Rollen oder Rundkneten so verformt, daß aus diesem das Außenrohr bildenden, hohlzylinderförmigen Rohling das Kugelgelenkteil und das das Kugelgelenkteil mit dem Schaftteil verbindende Halsteil ausgebildet sind. Das Außenrohr ist dabei so weit verformt, bis es in seinen Endbereichen an dem Innenrohr anliegt.

Nachteilig ist dabei insbesondere, daß durch den Vorgang des Rundknetens nicht sichergestellt ist, daß der Hohlkolben druckdicht gegenüber dem Arbeitsmedium der Axialkolbenmaschine ist. Dadurch kann Arbeitsmedium in die Hohlkolben eingedrückt werden, wodurch die Laufeigenschaften durch die Gewichtserhöhung und die entstehenden Unwuchten negativ beeinflußt werden.

Der Erfindung liegt demnach die Aufgabe zugrunde, einen Hohlkolben nach dem Oberbegriff des Anspruchs 1 so auszugestalten, daß im Funktionsbetrieb das Einströmen von Arbeitsmedium in den Hohlkolben vermieden wird, und ein Verfahren zur Herstellung der erfindungsgemäßen Hohlkolbens anzugeben.

Diese Aufgabe wird bezüglich des Hohlkolbens durch die Merkmale des Anspruches 1 und bezüglich des Herstellungsverfahrens durch die Merkmale der Ansprüche 15 oder 16 gelöst.

Der mehrteilig ausgeformte Hohlkolben wird mit einer oder mehreren thermisch verformbaren Massen, insbesondere Lotmassen versehen, welche bei Erwärmung in die Stoßbereiche der den Hohlkolben bildenden Rohre einsickern und diese dadurch druckdicht verschließen. Neben einer Lotmasse kommt z. B. auch eine thermoplastische Kunststoffmasse in Betracht.

Besonders vorteilhaft ist die Formung des Hohlkolbens und des daran ausgebildeten Kugelkopfes durch Rundkneten, was einfach und kostengünstig ist.

Eine besonders einfache und daher kostengünstige Herstellungsvariante ist die Formung des Hohlkolbens aus zwei geraden Rohren unterschiedlicher Durchmesser, welche ineinandergeschoben und ebenfalls durch Rundkneten geformt werden. Eine nachfolgende Erwärmung sorgt auch hier für das Einsickern der Massen, insbesondere Lotmassen in die Stoßbereiche der Rohre.

Zwischen den Rohren ist ein Hohlraum ausgebildet, welcher den Hohlkolben vorteilhafterweise leicht macht und dadurch mit guten dynamischen Eigenschaften versieht.

Eine Durchgangsbohrung ermöglicht eine hydrostatische Entlastung der Laufflächen der mit den Hohlkolben über ein Kugelgelenk verbundenen Gleitschuhe.

Nachfolgend werden die Erfindung und weitere durch sie erzielbare Vorteile anhand von bevorzugten Ausgestaltungen und Zeichnungen näher erläutert. Es zeigen:
- Fig. 1A-1B: eine geschnittene Darstellung eines ersten Beispiels eines Hohlkolbens in zwei Herstellungsschritten;
- Fig. 2A-2B: eine geschnittene Darstellung eines zweiten Beispiels eines Hohlkolbens in zwei Herstellungsschritten; und
- Fig. 3A-3B: eine geschnittene Darstellung eines Ausführungsbeispiels eines erfindungsgemäßen
wobei die Figuren 1A, 1B, 2A und 2B lediglich Beispiele zeigen, die sich nicht duf die erfindung bezichen.

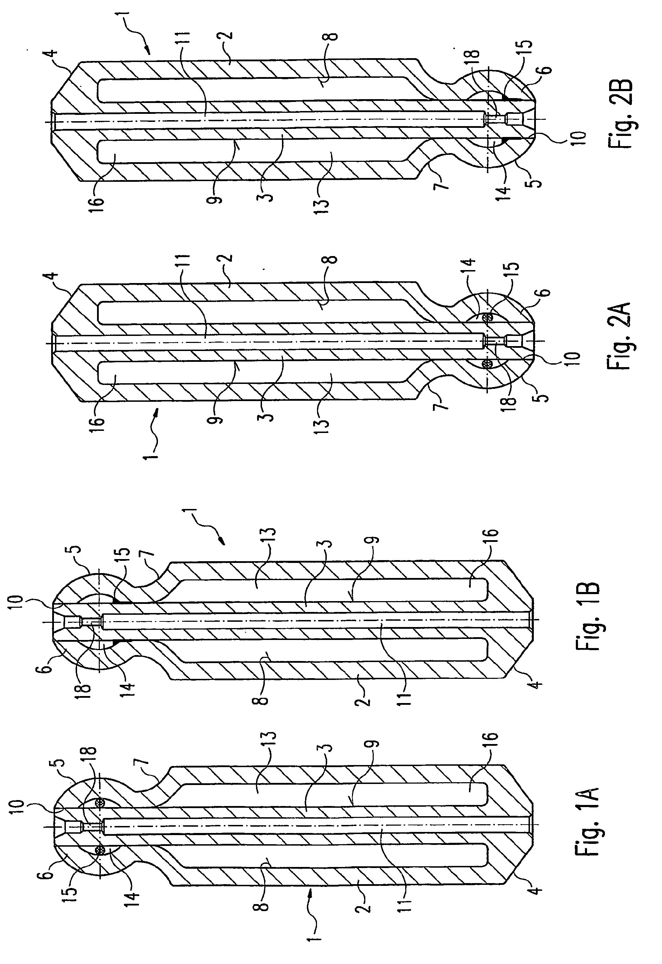

Ein Hohlkolben 1 z. B. für eine nicht weiter dargestellte Axialkolbenmaschine oder Radialkolbenmaschine weist ein Außenrohr 2 und ein darin angeordnetes Innenrohr 3 auf. In den in den Fig. 1A und 1B sowie 2A und 2B dargestellten Beispielen ist das Innenrohr 3 mit dem Außenrohr 2 einstückig beispielsweise durch das in der DE 199 38 046 A1 beschriebene Verfahren hergestellt. Der Hohlkolben 1 ist somit an einem ersten Ende 4 gegenüber einer Umgebung des Hohlkolbens 1 abgeschlossen. Der Hohlkolben 1 ist durch die Verwendung von rohrförmigen Grundelementen sehr leicht, wodurch er gute Laufeigenschaften erhält.

An einem zweiten Ende 5 des Hohlkolbens 1 ist ein Kugelkopf 6 ausgebildet. Dieser ist beispielsweise durch Rundkneten am Außenrohr 2 des Hohlkolbens 1 unter Bildung eines kragenförmigen Abschnitts 7 angeformt. Im Bereich des kragenförmigen Abschnitts 7 liegt eine Innenwandung 8 des Außenrohres 2 an einer Außenwandung 9 des Innenrohres 3 an. Ebenfalls durch Rundkneten ist der Kugelkopf 6 unter Bildung eines Stoßbereiches 10 am Innenrohr 3 ausgeformt.

Im Innenrohr 3 verläuft eine axiale Bohrung 11, welche sich durch den gesamten Hohlkolben 1 vom ersten Ende 4 zum zweiten Ende 5 erstreckt. Die Bohrung 11 ermöglicht eine hydrostatische Entlastung der Lauffläche eines mit dem Hohlkolben an den kugelkopfverbundenen Gleitschuhs. Die Bohrung 11 kann eine Drosselstelle 12 aufweisen, welche den Durchfluß auf ein festgelegtes Maß drosselt.

Da die Drücke innerhalb des Arbeitsmediums während des Betriebs der Axialkolbenmaschine sehr hoch sind, ist es möglich, daß im Stoßbereich 10 Arbeitsmedium in einen Innenraum 13 des Hohlkolbens 1 gedrückt wird. Dadurch verliert der Hohlkolben 1 zumindest teilweise durch die Gewichtszunahme seine Laufeigenschaften, was durch Unwuchten zu Laufunruhe oder zu Beschädigungen der Kolbenmaschine führen kann.

Um dem entgegenzuwirken, sind erfindungsgemäß Dichtmaßnahmen vorgesehen, um den Hohlraum 13 des Hohlkolbens 1 druckdicht gegen das Arbeitsmedium der Axialkolbenmaschine abzuschließen. Hierzu wird während der Herstellung des Hohlkolbens 1 in einen ersten Teilbereich 14 des Hohlraums 13 im Bereich des Kugelkopfes 6 eine thermisch verformbare Masse, vorzugsweise eine Lotmasse 15, eingebracht. Diese kann beispielsweise ringförmig ausgebildet sein und aus Hartlot bestehen. Danach wird der Hohlkolben 1 fertiggestellt. Anschließend wird der Hohlkolben 1 erhitzt, wodurch die Masse, vorzugsweise Lotmasse 15, verflüssigt wird und so zwischen die Innenwandung 8 des Außenrohres 2 und die Außenwandung 9 des Innenrohres 3 einsickert, daß eine druckdichte Abdichtung gegenüber dem Arbeitsmedium erzielt wird. Anstatt einer Lotmasse kann auch eine thermoplastische Kunststoffmasse in Betracht kommen.

In Fig. 1A und 1B wird dabei der Hohlkolben 1 auf seinem ersten Ende 4 stehend erhitzt, während der Hohlkolben in den Fig. 2A und 2B auf seinem zweiten Ende 5 bzw. auf dem Kugelkopf 6 stehend erhitzt wird. Im ersten Fall läuft die Masse, vorzugsweise Lotmasse 15, in den kragenförmigen Bereich 7, wodurch noch die Möglichkeit bestünde, daß geringfügige Mengen des Arbeitsmediums durch den Stoßbereich 10 in den ersten Teilbereich 14 des Hohlraums 13 im Bereich des Kugelkopfes 6 eindringen. Dies kann durch die in den Fig. 2A und 2B dargestellte Erhitzung "über Kopf" vermieden werden, wobei die Masse, vorzugsweise Lotmasse 15, in den Stoßbereich 10 einsickert und sowohl den ersten Teilbereich 14 als auch einen zweiten Teilbereich 16 des Hohlraums 13 druckdicht gegen das Arbeitsmedium abdichtet.

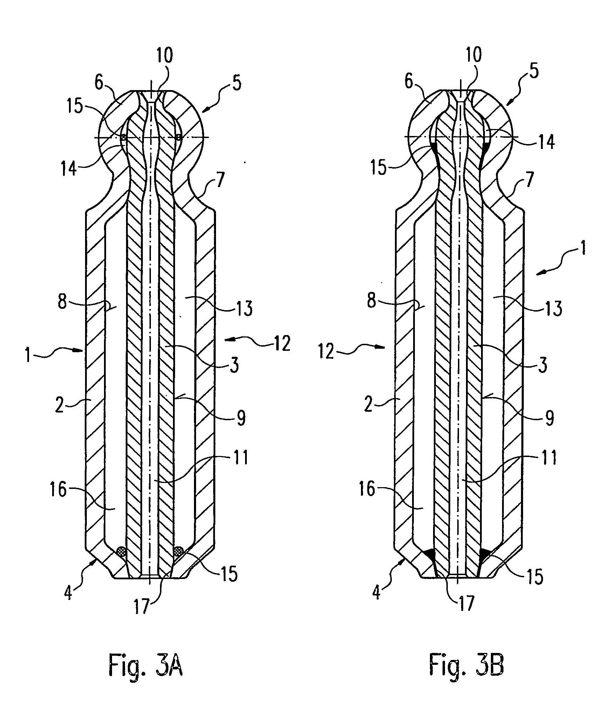

Eine besonders einfache Methode zur Herstellung eines Hohlkolbens 1 ist das Einlegen eines gleichmäßig dicken, geraden Innenrohrs 3 in ein ebenfalls gerades Außenrohr 2, so wie dies aus der DE 197 06 075 A1 hervorgeht. Dieses wird dann an den Enden 4 und 5 sowie in dem kragenförmigen Bereich 7 durch Rundkneten zu einem Hohlkolben 1 geformt. Nachteilig hierbei ist jedoch, daß es zwei Stoßbereiche 10, 17 gibt, an welchen Arbeitsmedium in den Hohlraum 13 gedrückt werden kann. Um dies zu verhindern, werden sowohl in den ersten Teilbereich 14 als auch in den zweiten Teilbereich 16 des Hohlraums 13 vor dem Rundkneten Lotmassen 15 in Ringform eingelegt, so wie dies in Fig. 3A dargestellt ist. Nach Beendigung des Rundknetvorganges wird der Hohlkolben 1 ebenfalls erhitzt, wodurch die Massen, vorzugsweise Lotmassen 15, in die Stoßbereiche 10 und 17 einsickern und diese druckdicht verschließen.

Fig. 3A und 3B zeigen eine Variante des oben beschriebenen Verfahrens. In diesem Ausführungsbeispiel ist der Hohlkolben 1 in "aufrechter" Position, also mit dem Kugelkopf 6 nach oben, erhitzt worden, so daß die Massen, vorzugsweise Lotmassen 15, in den kragenförmigen Bereich 7 sowie in den zweiten Stoßbereich 17 einsickern. Dabei besteht nach wie vor die Möglichkeit, daß Arbeitsmedium in den ersten Teilbereich 14 des Hohlraums 13 eindringt. Um dies zu verhindern, ist es beispielsweise möglich,'zunächst das Ende 4 des Hohlkolbens 1 zu erhitzen, so daß die Masse, vorzugsweise Lotmasse 15, in den Stoßbereich 17 einsickert, und dann unter Drehen des Hohlkolbens 1 den Bereich des Kugelkopfes 6 zu erhitzen, so daß die dort angeordnete Masse, vorzugsweise Lotmasse 15, in den Stoßbereich 10 einsickert.

Dabei können auch zwei Lotmassen 15 mit unterschiedlichem Schmelzpunkt zum Einsatz kommen, d. h. die Lotmasse 15 zum Verschließen des Stoßbereichs 17 hat einen anderen Schmelzpunkt als die Lotmasse 15 zum Verschließen des Stoßbereichs 10. Während bei Erwärmung auf eine erste Temperatur zunächst nur die Lotmasse zum Verschließen des Stoßbereichs 17 verflüssigt wird, wird nach anschließender Drehung des Hohlkolbens 1 und Erwärmung auf eine gegenüber der ersten Temperatur höhere zweite Temperatur anschließend die Lotmasse zum Verschließen des Stoßbereichs 10 verflüssigt, oder umgekehrt. Dies stellt sicher, daß die Lotmasse am Ende 5 nicht am Kragenbereich 7, sondern außenseitig den Stoßbereich 10 abdichtet.

## Patentansprüche

1. Hohlkolben (1) für eine Kolbenmaschine, umfassend einen rohrförmigen Abschnitt (12), einen kragenförmigen Bereich (7) und eine Gelenkkugel (5), welche an dem kragenförmigen Bereich (7) angeformt ist, sowie ein in einem Außenrohr (2) angeordnetes Innenrohr (3), wobei zwischen dem Außenrohr (2) und dem Innenrohr (3) zumindest teilweise ein Hohlraum (13) ausgebildet ist,
wobei sich eine Bohrung (11) des Innenrohrs (3) durch den gesamten Hohlkolben (1) und die daran ausgebildete Gelenkkugel (6) erstreckt und
wobei das Innenrohr (3) in das Außenrohr (2) eingeschoben ist, **dadurch gekennzeichnet, dass** der Hohlraum (13) gegenüber der Umgebung des Hohlkolbens (1) durch eine in dem Hohlraum (13) angeordnete und durch Erwärmung zumindest mit einer Wandung (8, 9) des Hohlraums (13) in Formschluss gebrachte Masse, insbesondere Lotmasse (15), druckdicht abgeschlossen ist

2. Hohlkolben nach Anspruch 1,
**dadurch gekennzeichnet,**
**dass** sich das Innenrohr (3) über die axiale Länge des Außenrohrs (2) erstreckt.

3. Hohlkolben nach einem der Ansprüche 1 oder 2,
**dadurch gekennzeichnet,**
**dass** das Außenrohr (2) im Bereich des kragenförmigen Bereichs (7) am Innenrohr (3) anliegt.

4. Hohlkolben nach Anspruch 3,
**dadurch gekennzeichnet,**
**dass** die Masse, insbesondere Lotmasse (15), im Bereich des Kugelkopfes (6) zwischen einem Stoßbereich (10) des Innenrohrs am Außenrohr (2) und dem kragenförmigen Bereich (7) angeordnet ist.

5. Hohlkolben nach Anspruch 4,
**dadurch gekennzeichnet,**
**dass** nach Erwärmung die Masse, insbesondere Lotmasse (15), in Formschluss mit der Wandung (8,9) des Hohlkolbens (1) im Bereich des kragenförmigen Bereichs (7) ist.

6. Hohlkolben nach Anspruch 5,
**dadurch gekennzeichnet,**
**dass** die Masse, insbesondere Lotmasse (15), einen Bereich (14) des Hohlraums (13) im Bereich des Kugelkopfes (6) druckdicht abdichtet.

7. Hohlkolben nach Anspruch 6,
**dadurch gekennzeichnet,**
**dass** nach Erwärmung die Masse, insbesondere Lotmasse (15), in Formschluss mit der Wandung (8,9) des Hohlkolbens (1) im Stoßbereich (10) zwischen dem Innenrohr (3) und dem Außenrohr (2) im Bereich des Kugelkopfes (6) ist.

8. Hohlkolben nach Anspruch 7,
**dadurch gekennzeichnet,**
**dass** die Masse, insbesondere Lotmasse (15), einen ersten Teilbereich (14) im Bereich des Kugelkopfes (6) und einen zweiten Teilbereich (16) des Hohlraums (13), der von dem ersten Teilbereich (14) durch den kragenförmigen Bereich (7) getrennt ist, druckdicht abdichtet.

9. Hohlkolben nach Anspruch 1,
**dadurch gekennzeichnet,**
**dass** in einem ersten Teilbereich (14) des Hohlraums (13) zwischen dem Kugelkopf (6) und dem kragenförmigen Bereich (7) die Masse, insbesondere Lotmasse (15), angeordnet ist.

10. Hohlkolben nach Anspruch 9,
**dadurch gekennzeichnet,**
**dass** in einem zweiten Teilbereich (16) zwischen dem Ende (4) des Hohlkolbens (1) und dem kragenförmigen Bereich (7) eine weitere Masse, insbesondere Lotmasse (15), angeordnet ist.

11. Hohlkolben nach Anspruch 10,
**dadurch gekennzeichnet,**
**dass** nach Erwärmung die Massen, insbesondere Lotmassen (15), in Formschluss mit der Wandung (8, 9) des Hohlkolbens (1) am rundgekneteten Ende (4) des Außenrohrs (2) sowie in dem kragenförmigen Bereich (7) sind.

12. Verfahren zum Herstellen eines Hohlkolbens (1) für eine Kolbenmaschine, umfassend einen rohrförmigen Abschnitt (12), einen kragenförmigen Bereich (7) und eine Gelenkkugel (6), welche an dem kragenförmigen Bereich (7) angeformt ist, sowie ein in einem Außenrohr (2) eingeschobenes Innenrohr (3), wobei zwischen dem Außenrohr (2) und dem Innenrohr (3) zumindest teilweise ein Hohlraum (13) ausgebildet ist, wobei der Hohlraum (13) gegenüber der Umgebung des Hohlkolbens (1) durch eine in dem Hohlraum (13) angeordnete und durch Erwärmung mit zumindest einer Wandung (8, 9) des Hohlraums (13) in Formschluß gebrachte Masse, insbesondere Lotmasse (15), druckdicht abgeschlossen ist,
umfassend folgende Verfahrensschritte:
- Einschieben eines geraden Innenrohrs (3) in ein gerades Außenrohr (2),
- Einbringen zweier Massen, insbesondere Lotmassen (15), nahe den Enden (4, 5) der Rohre (2, 3),
- Rundkneten der Enden (4, 5) sowie des kragenförmigen Bereichs (7), und
- Erwärmen des Hohlkolbens (1) zum Einsickern der Massen, insbesondere Lotmassen (15), in die Stoßbereiche (10, 17) und/oder den kragenförmigen Bereich (7).

13. Verfahren nach Anspruch 12,
**dadurch gekennzeichnet,**
**dass** der letzte Verfahrensschritt folgende Verfahrensschritte umfasst:
- Erwärmen eines ersten Endes (4) des Hohlkolbens zum Einsickern der Masse, insbesondere Lotmasse (15), in einen Stoßbereich (17),
- Umdrehen des Hohlkolbens (1), und
- Erwärmen eines zweiten Endes (5) des Hohlkolbens im Bereich des Kugelkopfes (6) zum Einsickern der Masse, insbesondere Lotmasse (15), in einen Stoßbereich (10).

## Claims

1. Hollow piston (1) for a piston machine, comprising a tubular section (12), a collar-shaped region (7) and a joint ball (5), which is integrally formed on the collar-shaped region (7), and also an inner tube (3) arranged in an outer tube (2), a hollow space (13) being formed, at least partly, between the outer tube (2) and the inner tube (3) ,
a bore (11) of the inner tube (3) extending through the entire hollow piston (1) and the joint ball (6) formed thereon, and
the inner tube (3) being pushed into the outer tube (2), **characterised in that** the hollow space (13) is closed off pressure-tightly from the area surrounding the hollow piston (1) by a material, in particular solder material (15), which is arranged in the hollow space (13) and is brought into form closure at least with one wall (8, 9) of the hollow space (13) by heating.

2. Hollow piston according to Claim 1,
**characterised**
**in that** the inner tube (3) extends over the axial length of the outer tube (2).

3. Hollow piston according to one of Claims 1 and 2,
**characterised**
**in that** the outer tube (2) bears against the inner tube (3) in the region of the collar-shaped region (7).

4. Hollow piston according to Claim 3,
**characterised**
**in that** the material, in particular solder material (15), is arranged in the region of the ball head (6) between a region of abutment (10) of the inner tube against the outer tube (2) and the collar-shaped region (7).

5. Hollow piston according to Claim 4,
**characterised**
**in that**, after heating, the material, in particular solder material (15), is in form closure with the wall (8, 9) of the hollow piston (1) in the region of the collar-shaped region (7).

6. Hollow piston according to Claim 5,
**characterised**
**in that** the material, in particular solder material (15), seals off pressure-tightly a region (14) of the hollow space (13) in the region of the ball head (6).

7. Hollow piston according to Claim 6,
**characterised**
**in that**, after heating, the material, in particular solder material (15), is in form closure with the wall (8, 9) of the hollow piston (1) in the region of abutment (10) between the inner tube (3) and the outer tube (2) in the region of the ball head (6).

8. Hollow piston according to Claim 7,
**characterised**
**in that** the material, in particular solder material (15), seals off pressure-tightly a first subregion (14) in the region of the ball head (6) and a second subregion (16) of the hollow space (13) separated from the first subregion (14) by the collar-shaped region (7).

9. Hollow piston according to Claim 1,
**characterised**
**in that** the material, in particular solder material (15), is arranged in a first subregion (14) of the hollow space (13) between the ball head (6) and the collar-shaped region (7).

10. Hollow piston according to Claim 9,
**characterised**
**in that** a further material, in particular solder material (15), is arranged in a second subregion (16) between the end (4) of the hollow piston (1) and the collar-shaped region (7).

11. Hollow piston according to Claim 10,
**characterised**
**in that**, after heating, the materials, in particular solder materials (15), are in form closure with the wall (8, 9) of the hollow piston (1) at the rotary-kneaded end (4) of the outer tube (2) and also in the collar-shaped region (7).

12. Method for producing a hollow piston (1) for a piston machine, comprising a tubular section (12), a collar-shaped region (7) and a joint ball (6), which is integrally formed on the collar-shaped region (7), and also an inner tube (3) pushed into an outer tube (2), a hollow space (13) being formed, at least partly, between the outer tube (2) and the inner tube (3), the hollow space (13) being closed off pressure-tightly from the area surrounding the hollow piston (1) by a material, in particular solder material (15), which is arranged in the hollow space (13) and is brought into form closure with at least one wall (8, 9) of the hollow space (13) by heating,
comprising the following method steps:
- pushing of a straight inner tube (3) into a straight outer tube (2),
- introduction of two materials, in particular solder materials (15), near the ends (4, 5) of the tubes (2, 3),
- rotary kneading of the ends (4, 5) and also of the collar-shaped region (7), and
- heating of the hollow piston (1) to cause the materials, in particular solder materials (15), to seep into the regions of abutment (10, 17) and/or the collar-shaped region (7).

13. Method according to Claim 12,
**characterised**
**in that** the last method step comprises the following method steps:
- heating of a first end (4) of the hollow piston to cause the material, in particular solder material (15), to seep into a region of abutment (17),
- rotation of the hollow piston (1), and
- heating of a second end (5) of the hollow piston in the region of the ball head (6) to cause the material, in particular solder material (15), to seep into a region of abutment (10).

## Revendications

1. Piston creux (1) pour une machine à pistons, comprenant un tronçon (12) de forme tubulaire, une zone en forme de col (7) et une sphère ou rotule d'articulation (5) qui est formée à la suite de la zone en forme de col (7), ainsi qu'un tube intérieur (3) agencé dans un tube extérieur (2), piston dans lequel entre le tube extérieur (2) et le tube intérieur (3) est formé, au moins en partie, un espace creux (13),
dans lequel un alésage (11) du tube intérieur (3) s'étend à travers la totalité du piston creux (1) et de la rotule d'articulation (6) qui y est réalisée, et
dans lequel le tube intérieur (3) est inséré dans le tube extérieur (2),
**caractérisé**
**en ce que** l'espace ceux (13) est fermé de manière étanche à la pression, par rapport à l'environnement extérieur du piston creux (1), par une masse ou pâte, notamment une masse de brasure (15), qui est agencée dans l'espace creux (13) et qui est amenée, par chauffage, en liaison intime par complémentarité de forme avec au moins une paroi (8, 9) de l'espace creux (13).

2. Piston creux selon la revendication 1,
**caractérisé**
**en ce que** le tube intérieur (3) s'étend sur la totalité de la longueur axiale du tube extérieur (2).

3. Piston creux selon l'une des revendications 1 ou 2,
**caractérisé**
**en ce que** le tube extérieur (2) s'appuie contre le tube intérieur (3) au niveau de la zone en forme de col (7).

4. Piston creux selon la revendication 3,
**caractérisé**
**en ce que** la masse ou pâte, notamment la masse de brasure (15) est agencée, dans la zone de la tête de rotule (6), entre une zone d'appui réciproque (10) du tube intérieur contre le tube extérieur (2), et la zone en forme de col (7).

5. Piston creux selon la revendication 4,
**caractérisé**
**en ce qu'**après chauffage, la masse ou pâte, notamment la masse de brasure (15), est en liaison intime par complémentarité de forme avec la paroi (8, 9) du piston creux (1) dans la zone en forme de col (7).

6. Piston creux selon la revendication 5,
**caractérisé**
**en ce que** la masse ou pâte, notamment la masse de brasure (15), rend étanche, par une étanchéité à la pression, une zone (14) de l'espace creux (13) dans la zone de la tête de rotule (6).

7. Piston creux selon la revendication 6,
**caractérisé**
**en ce qu'**après chauffage, la masse ou pâte, notamment la masse de brasure (15), est en liaison intime par complémentarité de forme avec la paroi (8, 9) du piston creux (1), dans la zone d'appui réciproque (10) entre le tube intérieur (3) et le tube extérieur (2), au niveau de la tête de rotule (6).

8. Piston creux selon la revendication 7,
**caractérisé**
**en ce que** la masse ou pâte, notamment la masse de brasure (15), rend étanche, par une étanchéité à la pression, une première zone partielle (14) dans la zone de la tête de rotule (6) et une deuxième zone partielle (16) de l'espace creux (13), qui est séparée de la première zone partielle (14) par la zone en forme de col (7).

9. Piston creux selon la revendication 1,
**caractérisé**
**en ce que** dans une première zone partielle (14) de l'espace creux (13), entre la tête de rotule (6) et la zone en forme de col (7), est agencée la masse ou pâte, notamment la masse de brasure (15).

10. Piston creux selon la revendication 9,
**caractérisé**
**en ce que** dans une deuxième zone partielle (16) entre l'extrémité (4) du piston creux (1) et la zone en forme de col (7), est agencée une autre masse ou pâte, notamment une masse de brasure (15).

11. Piston creux selon la revendication 10,
**caractérisé**
**en ce qu'**après chauffage, les masses ou pâtes, notamment les masses de brasure (15), sont en liaison intime par complémentarité de forme avec la paroi (8, 9) du piston creux (1), au niveau de l'extrémité (4) ayant subi un formage par rétreint par martelage ou pétrissage rotatif du tube extérieur (2), ainsi qu'au niveau de la zone en forme de col (7).

12. Procédé de fabrication d'un piston creux (1) pour une machine à pistons, comprenant un tronçon (12) de forme tubulaire, une zone en forme de col (7) et une sphère ou rotule d'articulation (6) qui est formée à la suite de la zone en forme de col (7), ainsi qu'un tube intérieur (3) inséré dans un tube extérieur (2), un espace creux (13) étant formé au moins en partie entre le tube extérieur (2) et le tube intérieur (3), et l'espace ceux (13) étant fermé de manière étanche à la pression, par rapport à l'environnement extérieur du piston creux (1), par une masse ou pâte, notamment une masse de brasure (15), qui est agencée dans l'espace creux (13) et qui est amenée, par chauffage, en liaison intime par complémentarité de forme avec au moins une paroi (8, 9) de l'espace creux (13),
le procédé comprenant les étapes de procédé suivantes :
- insertion d'un tube intérieur (3) rectiligne dans un tube extérieur (2) rectiligne,
- introduction de deux masses ou pâtes, notamment masses de brasure (15), à proximité des extrémités (4, 5) des tubes (2, 3),
- formage, par rétreint par martelage ou pétrissage rotatif, des extrémités (4, 5) ainsi que de la zone en forme de col (7), et
- chauffage du piston creux (1) pour faire infiltrer les masses ou pâtes, notamment les masses de brasure (15), dans les zones d'appui réciproque (10, 17) et/ou la zone en forme de col (7).

13. Procédé selon la revendication 12,
**caractérisé**
**en ce que** la dernière étape de procédé englobe les étapes suivantes .
- chauffage d'une première extrémité (4) du piston creux pour l'infiltration de la masse ou pâte, notamment la masse de brasure (15), dans une zone d'appui réciproque (17),
- retournement du piston creux (1), et
- chauffage d'une deuxième extrémité (5) du piston creux dans la zone de la tête de rotule (6), pour l'infiltration de la masse ou pâte, notamment la masse de brasure (15), dans une deuxième zone d'appui réciproque (10).
